# EUROPEAN PATENT SPECIFICATION

(11) **EP 0 327 817 B1**
(45) Date of publication and mention of the grant of the patent: **28.08.1996**
(21) Application number: 89100421.0
(22) Date of filing: 11.01.1989
(51) Int. Cl.: G06K 9/66, G06F 15/80

(54) **Associative pattern conversion system and adaptation method thereof**
Assoziatives Musterkonversionssystem und Anpassungsverfahren dafür
Système de conversion de forme associative et méthode d'adaptation de ce système

(30) Priority: 11.01.1988 JP 3584/88; 17.02.1988 JP 34844/88; 23.05.1988 JP 125477/88; 01.07.1988 JP 164235/88; 04.11.1988 JP 278946/88; 25.11.1988 JP 297541/88
(43) Date of publication of application: 16.08.1989
(73) Proprietor: YOZAN INC., Tokyo 155 (JP); SHARP KABUSHIKI KAISHA, Osaka 545 (JP)
(72) Inventor: Takatori, Sunao c/o EZEL, INC., Shinjuku-ku Tokyo 160 (JP); Kumagai, Ryohei c/o EZEL, INC., Shinjuku-ku Tokyo 160 (JP); Yamamoto, Makoto c/o EZEL, INC., Shinjuku-ku Tokyo 160 (JP)
(74) Representative: Grünecker, Kinkeldey, Stockmair & Schwanhäusser Anwaltssozietät

(56) References cited:
- US-A- 4 095 122
- D. E. RUMELHART ET AL.: "Parallel Distributed Processing", vol. 1: "Foundations" 1986, pp. 319-362, MIT PRESS, Cambridge, US
- AIP CONFERENCE PROCEEDINGS 151, NEURAL NETWORKS FOR COMPUTING, 1986, New York, US, pp. 265-270; A.H. KLOPF: 'A drive-reinforcement model of single neuron function: an alternative to the Hebbian neuronal model'
- IEEE FIRST INTERNATIONAL CONFERENCE ON NEURAL NETWORKS vol. IV, 21-24 June 1987, San Diego, CA, pp. IV-365 - IV-370; H. YANG ET AL.: 'Performance of backpropagation for rotation invariant pattern recognition'
- NEURAL NETWORKS vol. 1, no. 4, 1988, New York, US, pp. 295-307; R.A. JACOBS: 'Increased rates of convergence through learning rate adaption'
- ELECTRONICS vol. 39, no. 17, 22 August 1966, New York, US, pp. 86-93; D.P. HATTAWAY ET AL.: 'Training a machine to read with nonlinear threshold logic'
- ELECTRONICS LETTERS vol. 23, no. 24, 19 November 1987, Stevenage, GB, pp. 1313-1314; Y. TSIVIDIS ET AL.: 'Analogue circuits for variable-synapse electronic neural networks'
- PATENT ABSTRACTS OF JAPAN vol. 12, no. 293 (E-645) 10 August 1988 & JP-A-63 070 453
- APPLIED OPTICS vol. 26, no. 14, 15 July 1987, New York, US, pp. 2712-2719; G.D. BOYD: 'Optically excited synapse for neural networks'
- M.J.B. DUFF (ED.) 'Computing Structures for Image Processing' 1983, ACADAMIC PRESS, LONDON, GB, pp. 175-178
- APPLIED OPTICS vol. 13, no. 11, November 1974, New York, US, pp. 2457-2458; L.C. CONANT & C.W. RENO: 'GaAs laser diode pumped Nd:YAG laser'

## Description

The present invention relates to an associative pattern conversion system as well as to an adaptation method for an associative pattern conversion system.

Conventionally, pattern-matching was applied to character or acoustic recognition. On such recognition, it has been impossible to judge input-signal exactly unless there is high coincidence between the input signal and registered pattern.

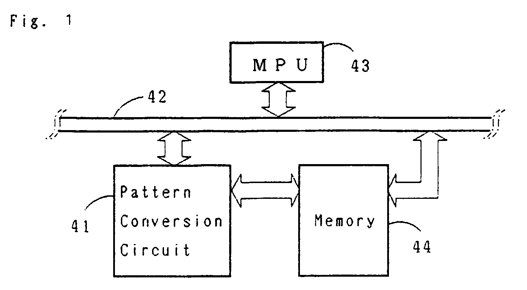

On the other hand, various models of neural network based on a neuron model has been proposed. The neuron model shown in Fig. 1 was announced by W. S. McCulloch and W. H. Pitts in Massachusetts Institute of Technology in U. S. A. in 1943. It was then proved that associative pattern-matching is possible by using neural network by F. Rosenblatt.

However, it is impossible to realize neural network with an integrated circuit; that is, it is impossible to realize the circuit with practical possibility, using all of present technology of semiconductor because enormous number of output pins are necessary to output associative pattern.

For example, when a character is input as a binary pattern of 32 32 dots, 10⁶ (=(32²)²) neurons are necessary to process the input as an orthogonal data and 10⁶ output pins are necessary to output the ignition pattern of all these neurons.

There was sore attempts to realize neuron model by software or hardware.

When it is realized by software, enormous memory is spent and the process speed is far from practical use.

Vhen it is realized by hardware, the system is not applicable for a slight modification of neuron model due to its lack of flexibility. The neuron model usually had to be simplified because it is difficult to electronically reappear the neuron model in a strict meaning.

From D.E. Rumelhart, et al.: "Parallel Distributed Processing," vol. 1: "Foundations," 1986, pgs. 319-362, MIT Press, Cambridge, US, a learning procedure for neural networks is known. According to this method, the network first uses the input vector to produce its own output vector and then compares this with the desired output or target vector. If there is no difference, no learning takes place. Otherwise the weights are changed to reduce the difference. The rule for changing weights is given by Δ_{*p*}*w*_{*ji*} = η(*t*_{*pj*} - *o*_{*pj*})*i*_{*pi*} = ηδ_{*pj*}*i*_{*pj*} where t_{*pj*} is the target input for *j*th component of the output pattern for pattern *p*, *o*_{*pj*} is the *j*th element of the actual output pattern produced by the presentation of input pattern *p*, *i*_{*pi*} is the value of the *i*th element of the input pattern, δ_{*pj*} *= t*_{*pj*} - *o*_{*pj*}, and Δ_{*p*}*w*_{*ij*} is the change to be made to the weight from the *i*th to the *j*th unit following presentation of pattern *p*.

From AIP Conference Proceedings 151, "Neural Networks For Computing," 1986, Snowbird, UT, pgs. 265-270, A.H Klopf "A drive-reinforcement model of single neuron function: an alternative to the Hebbian neuronal model," a neural learning mechanism is known that accounts for the basic animal learning phenomenon that have been observed.

The document further mentions a neuronal input-output relationship according to the following formula 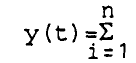 wᵢ(t)xᵢ(t) -θ where y(t) is a measure of the postsynaptic frequency of firing at discrete time, t; n is the number of synapses impinging on the neuron; wᵢ is the efficacy of synapse i; xᵢ is a measure of the frequency of action potentials at synapse i; and θ is the neuronal threshold. The document further states that the Hebbian learn mechanism may be specified as follows: Δwᵢ(t)=cxᵢ(t)y(t) where c is a learning rate constant and the other symbols are defined as above.

Jacobs, "Increased Rates of Convergence Through Learning Rate Adaptation", Neural Networks 1(1988), New York, discloses changing the current (t+1) weight data by multiplying the weight learning value, which is equal to the difference between the reference data d(t) ("desired response") and the output data y(t) multiplied by the input data x(t), with a weight-dependent coefficient E(t+1): E(t+1) is changed by δE with respect to E(t) in dependence upon derivatives of the error J. The error in turn depends on the current weight: J(t)=1/2kw²(t).

It is the object of the present invention to provide an associative pattern conversion system as well as an adaptation method for an associative pattern conversion system having an improved learning behavior.

This object is solved by the subject matter of claim 1 and 5. In the following preferred embodiments of the present invention are explained in detail in connection with the accompanying drawings which show:
Fig. 1, a preferred embodiment of the present invention;
Fig. 2, a pattern conversion circuit for the embodiment of Fig. 1;
Figs. 3A-D, diagrams of the output signals;
Figs. 4A-D diagrams of the weight variable;
Fig. 5, a wide modification portion comprising a table;
Fig. 6, an example of a composite data,
Fig. 7, a model of a N layers neural network;
Fig. 8A-D, diagram showing characteristics of weight functions;
Fig. 9, a diagram of a neuron network showing the first learning method;
Fig. 10, a diagram of a neuron showing the first learning method;
Fig. 11 a diagram of a neuron showing the second learning method;
Fig. 12 a diagram of a neuron network showing the third learning method; and
Fig. 13 a diagram of a neuron showing the third learning method.

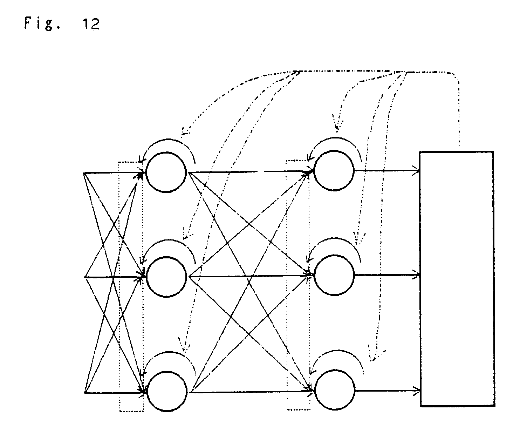

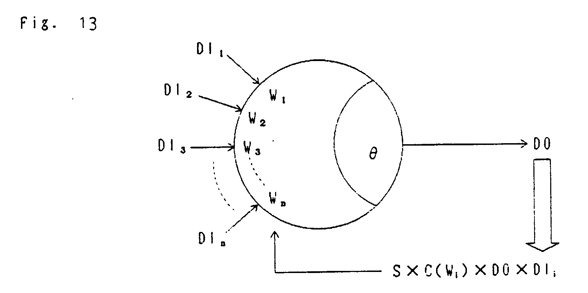

A preferred embodiment of the present invention is shown in Figs 1 to 13.

The associative pattern conversion system comprises a pattern conversion circuit 41 connected with a MPU 43 through a system bus 42. The pattern conversion circuit 41 is connected with a memory 45 through a local bus 44 (Fig 1).

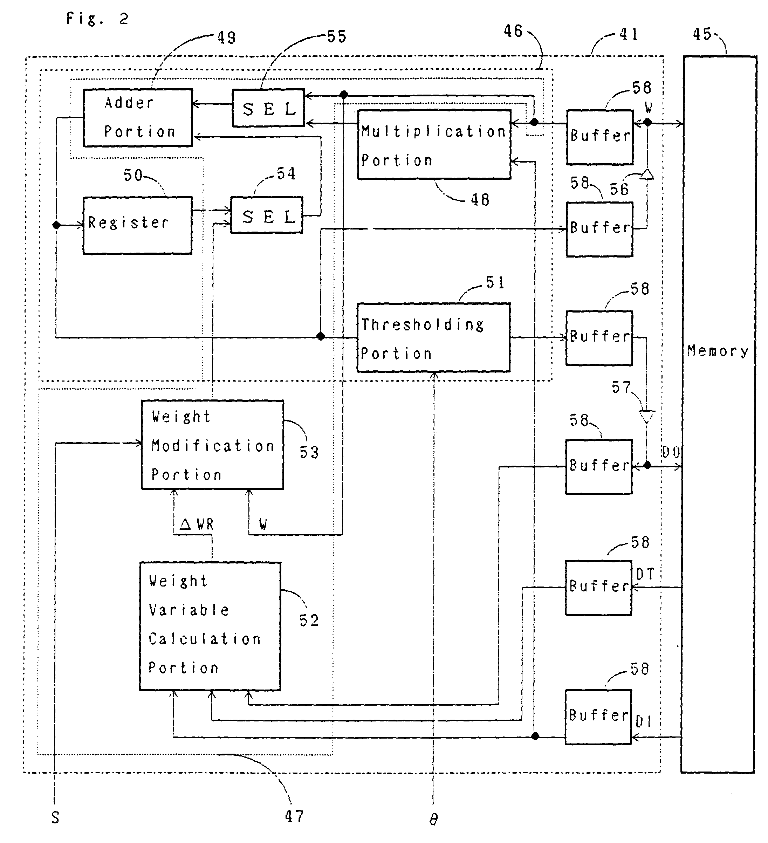

The pattern conversion circuit 41 is detailedly shown in Fig. 2, wherein the interconnection between the circuit 41 and the memory 45 is simplified for easy understanding.

The pattern conversion circuit 41 is provided with an associative portion 46 and learning portion 47, common circuits of them are commonly used by both portions so that the total construction is efficient and small.

The associative portion 48 comprises a multiplication portion 48 to which data from the memory 45 is inputted. The output of the multiplication portion 48 is inputted to an adder portion 49, the output of which is once held in a register 50 then fed back to an input of the adder portion 49 An input pattern data DI and a data as a parameter for association are inputted to the multiplication portion 48 which multiplies one data by the other. The parameter for association is for example a weight W of a synapse.

The adder portion 49 outputs the value of DI X W to the register 50. The data in the register 50 is added to the next multiplication result by the adder portion 49, the result of the addition is stored in the register 50. At last, the following calculation result is stored in the register 50.

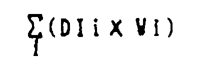

On finishing the calculation for association, the data stored in the register 50 is supplied to the thresholding portion 51. The thresholding portion 51 compares the calculation result of 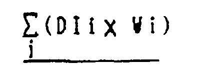 with a threshold θ so as to determine an output DO.

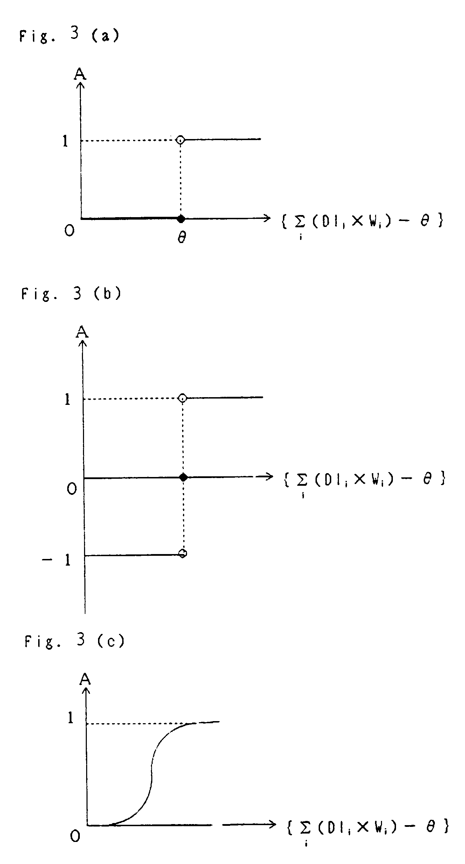

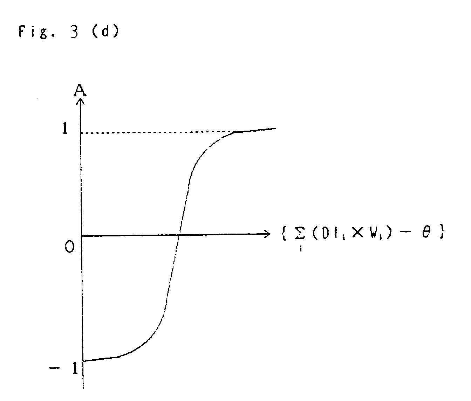

The output DO is calculated for example as follows;
(a- i)$\text{DO = φ {Σ(DIi X Wi)-θ}}$ where, φ( ) means a regularizing function which may have performance as shown in Figs 3(a) or (b).
(a-ii)$\text{DO=S{Σ(DIi X Wi)-θ}}$ where, S( ) means a sigmoid function which may have performance as shown in Figs 3(c) or (d).

In order to give the performances above to the thresholding portion 51, the thresholding portion 51 is provided with an electronical logic for calculation or a table etc. The table is core advantageous than the logic, on considering the flexibility of the thresholding portion 51. The performance of the thresholding portion 51 corresponds to the output performance of a neuron. What comprises the multiplication portion 48, adder portion 49, register 50 and thresholding portion 51 may be called an output data generating portion.

The learning portion 47 has a weight variable determining portion 52 to which the data DI, DO and a reference data DT are inputted. The data DT is a objective output to be outputted from the associative portion.

The weight variable determining portion 52 performs calculation such as following.
(b- i) Calculation according to DI, DO and DT$\text{δ=DT - DO}$$\text{ΔWR= δ X DI}$
   - δ:: Deviation of DO from DT;
   - ΔWR:: Reference value of weight variable;

This calculation is effective for evaluating the output DO so that a positive education is performed when DO is sufficiently correct or a negative education is performed when DO is not correct.
(b- ii) Calculation according to DI and DT$\text{ΔWR=DT X DI}$ This calculation is effective for learning the objective output in response to the input.
(b-iii) Calculation according to DI and DO$\text{ΔWR=DO X DI}$ This calculation is effective for evaluating the output in macro point of view so that a positive education is performed when DO is correct in macro point of view or negative education is performed when DO is not correct in macro point of view.

The output Δ WR from the weight variable determining portion 52 is inputted to a weight changing portion 53, to which the weight W is also inputted.

The weight changing portion 53 multiplies Δ WR by an efficiency C(W) then add the multiplication result to the weight W by the adder portion 49.$\text{W (T+1) = W(T)+C(W)XΔWR}$

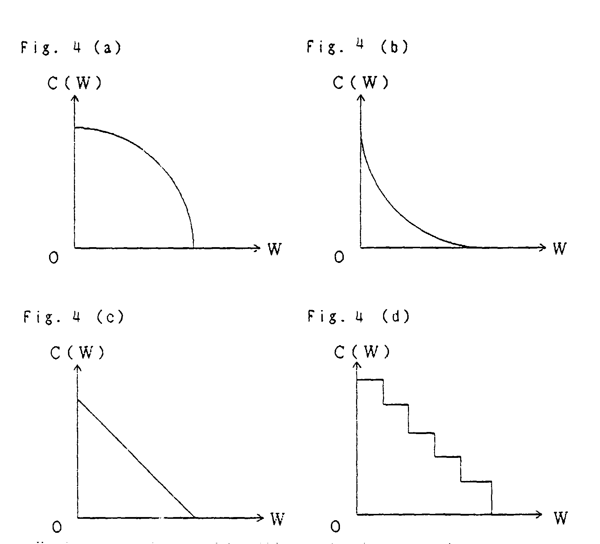

In this formula, W(T) means the current weight and W(T+1) means the changed weight. The efficiency C(W) is defined as a function of weight W. This function may have characteristics of monotonous decreasing function, as shown in Figs 4(a) to (d). By defining the function C(W) as a monotonous decreasing function, initial education becomes highly progressive, as well as, the converging speed becomes high.

The adder portion 49 is commonly used by both of the associative portion 46 and learning portion 47. A selector 54 is connected to the input of the adder portion 49 for selecting the output of the register 50 or the weight changing portion 53. A selector 55 is connected to the other input of the adder portion 49 for selecting the output of the multiplication portion 48 or the weight W. The output of the adder portion 49 is connected to a input line toward the thresholding portion 56 as well as to a line toward the memory 45 for input/output of W. The line toward the memory is controlled by a bus buffer 56. Output data DO is supplied by the thresholding portion 51 to the memory 45 or is supplied by the memory 45 to the weight changing portion 52. For this switching of line, the output of the thresholding portion 51 is connected through a bus buffer 57 to the input/output port of DO.

The associative portion 46 and the learning portion 47 may be remarkably improved in process speed by constructing the circuit by a high speed LSI. In this case, since the reading and writing speed of the memory is much lower than the process speed of the associative portion 46 and learning portion 47, a buffer 58 is connected to the input/output line for W, DO, DT and DI. On writing, the output from the associative portion 46 or learning portion 47 are stored in the buffer 58 in high speed, than the stored data is written in the memory 45 in a speed suitable for the memory 45. On reading, data is previously transmitted from the memory to the buffer 58; then the data is inputted to the portion 46 or 47 in high speed. A pipe-line architecture can be applied to the portions 46 and 49 for further improving their process speed.

The memory 45 may comprised a plurality of memories for each data or a single memory in which each data is allocated to different area from one another. The MPU 43 ray be directly connected to the data bus of the memory 45. It is also possible apply a graphic controller circuit for controlling great memory area when the data occupies a lot of memory area.

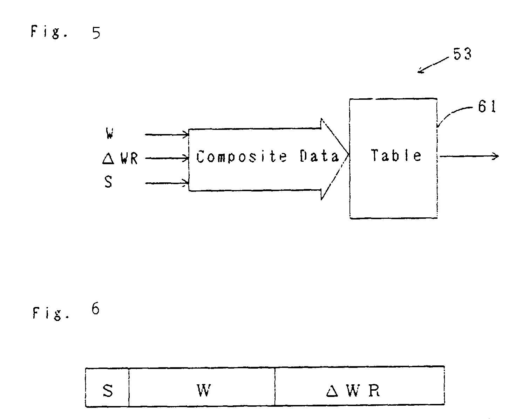

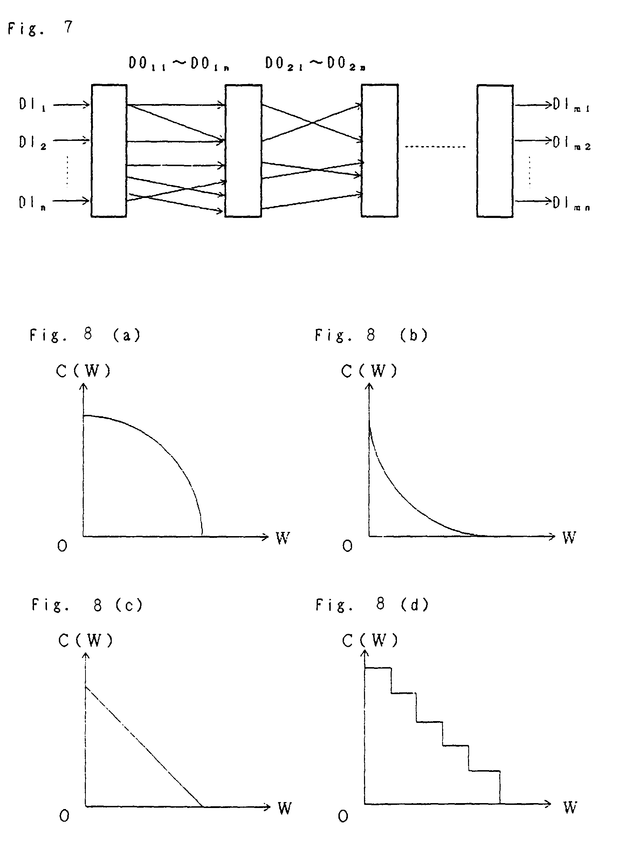

The weight changing portion 53 may be a calculation circuit for calculating W' from W and Δ WR. It is also possible to construct the portion 53 by a table 61 as shown in Fig. 5. A composite data (Fig 6) consisting of W and Δ WR is given to the table 61 as an address designation signal so as to output the calculation result stored in the table 61. The composite data may be a bit string including W and Δ WR. When the negative education is performed, Δ WR is subtracted from the W, in other words, the sign of Δ WR is changed according to the education manner. In this case, a bit of teacher signal S is added to the bit string, as shown in Figs 2 and 3. The bit S changes the address to be designated, when S is changed, so that the calculation result of the weight changing portion is changed. Vhen the weight changing portion is a calculation circuit, the teacher signal S is used as a control signal for the circuit. It is also possible to input the teacher signal to the weight variable determining portion 12 so as to control the sign of the Δ WR.

Hereinafter, the learning method for the system above is explained in detail.

The pattern conversion system above may be modelized as shown in Fig. 7. The system has N layers each of which has n inputs and n outputs. Each layer may have n neuron, each input of the layer is inputted to every neuron in the layer. The learning method is explained in connection with the calculation from (b-i) to (b-iii).

### (b-1)'

Hereafter, input data DI is deemed to consist of binary data from DI1 to DIn and DO is deemed to be a binary data for easy understanding. Therefore, DT is also a binary data.

When DO=0, nevertheless DT=1, the neuron does not ingite, which is to ignite. Then a synapse to which DIi of "1" is inputted should be increased in weight so that the neuron can more easily ignite by the input inputted at that time. While when DO=1, nevertheless DT=0, the neuron ignites, which is not to ignite. Then a synapse to which DIi of "1" is inputted should be decreased in weight so that the neuron cannot ignite by the input inputted at that time.

The rule above is explained mathematically with respect to k-th synapse of j-th neuron in i-th layer as follows:$\text{Wijk(T+1) = Wijk(T)+Cijk X V(DIijk) X M(DTij-DOij)}$
- Wijk(T) :: Current weight at that tine;
- Wijk(T+1) :: Weight changed by judging the current output;
- WIijk :: Current input to the synapse;
- DOij :: Current output from the neuron;
- DTij :: Objective output of the neuron;
- Cijk :: Efficiency of weight variable;
- V( ) :: Evaluation function for input;
- M( ) :: Evaluation function for output;

The evaluation function may be a regularizing function, binarizing function, linear function etc.

The regularizing function may have a characteristics below:

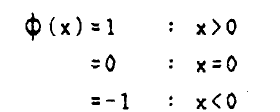

The binarizing function may have a characteristics below:

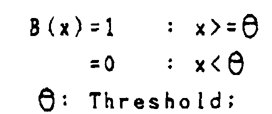

The linear function may be explained mathematically as follows;$\text{V(x) = x}$

The evaluation function evaluates the input whether it is significant or not.

The evaluation function for output includes an evaluation function for the difference between DTij and DOij. The evaluation of the difference is evaluation of Humming distance, Pythagorean distance, square root of the difference or others. The evaluation manner is performed for example by a regularizing function or binarizing function. The calculation result of V( ) and M( ) are ordinally connected by multiplication. This multiplication is multiplied by the efficiency Cij.

In the conventional learning method, Cij is usually deemed to be constant. According to the present invention, Cij is a function of weight W. Then Cij is explained as follows:$\text{Cij(W)}$

On considering the convergence of the pattern conversion system, it is preferable that the weight variable is great in the initial learning and becomes smaller in the final learning. This characteristics can be defined by various parameters. The number of times of learning or the time duration of learning or the calculation result of M( ) may be such parameter. However, from the point of learning progress, the weight W is the most preferable for the parameter. The weight W has practically maxim and minimum and the range of the weight should be limited within minimum range for making the circuit as simple as possible. During the learning, the significant weight changes toward the maximum when the initial value is minimum, or changes toward the minimum when the initial value is maximum. So the weight reflects the learning progress. With respect to a learning progress of a synapse, the weight reflects more directly and precisely the progress than other parameters, because the weight changes monotonously with the learning progress and the weight is saturated when it reaches the maximum or minimum. Since other parameters has indirect connection with the change of the weight, it is difficult to define the progress or saturation of the learning by other parameters.

Cijk(Wijk) has characteristic of steep changes in initial learning and dull changes in final learning. It will substantially explained as follows:$\text{dCijk(Wijk)/dWijk<=0}$

Therefore, Cijk(Wijk) is monotonous decreasing function. Figs 8 (a) to (d) are examples of characteristic of Cijk(Wijk).

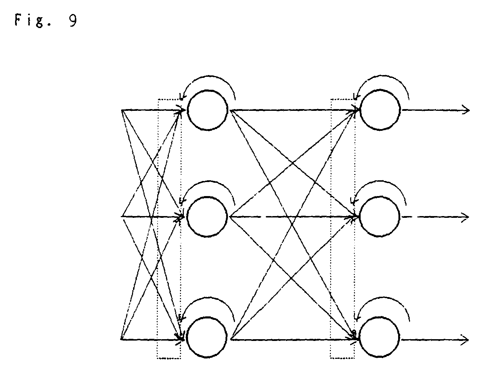

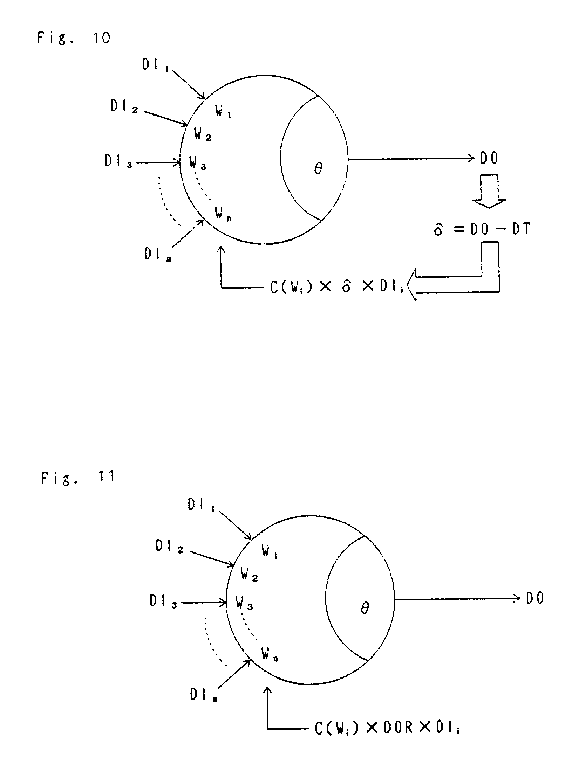

This learning method is modelized as shown in Figs 9 and 10.

### (b-ii)'

The learning method concerning the calculation (b-iii) is mathematically explained using parameters same as that of (b-i)', as follows:$\text{Wijk(T+1)=Wijk(T)+Cijk(Wijk) X V(DIijk)}$ This learning method is modelized as shown in Figs 9 and 11.

### (b-iii)'

The learning method concerning the calculation (b-ii) is mathematically explained using parameters sane as that of (b-i)' as follows:$\text{Wijk(T+1)=Wijk(T) + S X Cijk(Wijk) X V(DIijk)}$ S: Teacher signal;

The teacher signal is designated according to the output of the last layer. In the simplest model, S=1 when the output is evaluated to be positive and S=0 when negative. Or S=0 when the evaluation result is neutral, S=-1 when the evaluation is negative.

## Claims

1. An associative pattern conversion system comprising:
a memory (45) for storing at least input data, reference data, weight data and output data;
an output data generating means (48-51) for multiplying input data with corresponding weight data, summing the respective results to obtain a respective summation value and for generating output data based on the difference between the integration value and a predefined threshold value;
means (52) for calculating a weight learning value (δW) by determining the difference between corresponding reference data and output data and multiplying the result with the corresponding input data;
weight changing means (53) for changing current weight data by multiplying the weight learning value provided by the said calculating means (52) by a weight-dependent efficiency coefficient and by adding the result to the current weight data, characterised in that said weight-dependent efficiency coefficient is obtained from a weight dependent function which monotonously decreases for increasing weights.

2. A system according to claim 1, wherein said efficiency function is obtained from a table.

3. A system according to claim 2, wherein said table can be rewritten.

4. A system according to one of the claims 1 to 3 wherein said difference between said summation value and said threshold is calculated from a table.

5. An adaptation method for an associative pattern conversion system comprising the steps of:
multiplying each input data by weight data;
summing the multiplication results;
comparing the summation result with a threshold;
generating output data in accordance with the said comparison result;
calculating a weight learning value by determining the difference between corresponding reference data and output data and multiplying the result with the corresponding input data;
changing the current weight data by multiplying the weight learning value by a weight-dependent efficiency coefficient and by adding the result to the current weight data,
characterised in that the weight-dependent efficiency coefficient is obtained from a weight-dependent function which monotonously decreases for increasing weights.

## Patentansprüche

1. Assoziativmusterumwandlungssystem mit:
einem Speicher (45) zum Speichern von zumindest Eingangsdaten, Referenzdaten, Gewichtungsdaten und Ausgangsdaten;
einer Ausgangsdatenerzeugungseinrichtung (48-51) zum Multiplizieren der Eingangsdaten mit den entsprechenden Gewichtungsdaten, zum Summieren der entsprechenden Ergebnisse, um einen entsprechenden Summationswert zu erhalten und zum Erzeugen von Ausgangsdaten, basierend auf der Differenz zwischen dem Summationswert und einem vorgegebenen Schwellwert;
einer Einrichtung (52) zum Berechnen eines Gewichtungslernwertes (δW) durch Bestimmen der Differenz zwischen entsprechenden Referenzdaten und Ausgangsdaten und durch Multiplizieren des Ergebnisses mit den entsprechenden Eingangsdaten;
einer Gewichtungsveränderungseinrichtung (53) zum Verändern der momentanen Gewichtungsdaten durch Multiplizieren des Gewichtungslernwertes, wie er von der Berechnungseinheit (52) zur Verfügung gestellt wird, mit einem gewichtungsabhängigen Effizienzkoeffizienten und durch Addieren des Ergebnisses zu den momentanen Gewichtungsdaten, dadurch gekennnzeichnet, daß der gewichtungsabhängige Effizienzkoeffizient von einer gewichtungsabhängigen Funktion erhalten wird, die für zunehmende Gewichte monoton fällt.

2. System nach Anspruch 1, wobei die Effizienzfunktion von einer Tabelle erhalten wird.

3. System nach Anspruch 2, wobei die Tabelle erneut beschrieben werden kann.

4. System nach einem der Ansprüche 1 bis 3, wobei die Differenz zwischen dem Summationswert und dem Schwellwert anhand der Tabelle berechnet wird.

5. Adaptionsverfahren für ein Assoziativmusterumwandlungssystem mit folgenden Schritten:
Multiplizieren jeder Eingangsdaten mit Gewichtungsdaten;
Summieren der Multiplikationsergebnisse;
Vergleichen des Summationsergebnisses mit einem Schwellwert;
Erzeugen von Ausgangsdaten gemäß dem Vergleichsergebnis;
Berechnen eines Gewichtungslernwertes durch Bestimmen der Differenz zwischen entsprechenden Referenzdaten und Ausgangsdaten und durch Multiplizieren des Ergebnisses mit entsprechenden Eingangsdaten;
Verändern der momentanen Gewichtungssdaten durch Multiplizieren des Gewichtungslernwertes mit einem gewichtungsabhängigen Effizienzkoeffizienten und durch Addieren des Ergebnisses mit den momentanen Gewichtungsdaten, dadurch gekennzeichnet daß der gewichtungsabhängige Effizienzkoeffizient von einer gewichtungsabhängigen Funktion erhalten wird, die für zunehmende Gewichte monoton fällt.

## Revendications

1. Système de conversion de forme associative comprenant :
une mémoire (45) pour mémoriser au moins les données d'entrée, les données de référence, les données de poids et les données de sortie ;
des moyens générateurs de données de sortie (48,49,51) pour multiplier les données d'entrée par les données de poids correspondantes, additionner les résultats respectifs afin d'obtenir une valeur d'addition respective et pour générer des données de sortie basées sur la différence entre la valeur d'intégration et une valeur de seuil prédéfinie ;
des moyens (52) pour calculer une valeur d'apprentissage de poids (δW) en déterminant la différence entre les données de référence correspondantes et les données de sortie et en multipliant le résultat par les données d'entrée correspondantes ;
des moyens de changement de poids (53) pour changer les données de poids actuelles en multipliant la valeur d'apprentissage de poids fournie par lesdits moyens de calcul (52) par un coefficient d'efficacité variable avec le poids et en additionnant le résultat aux données de poids actuelles, caractérisés en ce que ledit coefficient d'efficacité variable avec le poids est obtenu à partir d'une fonction variable avec le poids qui décroît uniformément avec l'augmentation du poids.

2. Système selon la revendication 1, dans lequel ladite fonction d'efficacité est obtenue à partir d'une table.

3. Système selon la revendication 2, dans lequel ladite table peut être réécrite.

4. Système selon l'une des revendications 1 à 3 dans lequel ladite différence entre ladite valeur d'addition et ledit seuil est calculée à partir d'une table.

5. Procédé d'adaptation pour un système de conversion de forme associative comprenant les étapes suivantes :
multiplier chaque donnée d'entrée par les données de poids ;
additionner les résultats de multiplication ;
comparer le résultat d'addition par rapport à un seuil ;
générer des données de sortie conformément audit résultat comparatif ;
calculer une valeur d'apprentissage de poids en déterminant la différence entre les données de référence correspondantes et les données de sortie et en multipliant le résultat par les données- d'entrée correspondantes ;
changer les données de poids actuelles en multipliant la valeur d'apprentissage de poids actuelle par un coefficient d'efficacité variable avec le poids et en additionnant le résultat aux données de poids actuelles,
caractérisé en ce que le coefficient d'efficacité variable avec le poids est obtenu à partir d'une fonction variable avec le poids qui décroît uniformément avec l'augmentation du poids.
